# EUROPÄISCHE PATENTSCHRIFT

(11) **EP 0 473 955 B1**
(45) Veröffentlichungstag und Bekanntmachung des Hinweises auf die Patenterteilung: **20.07.1994**
(21) Anmeldenummer: 91113244.7
(22) Anmeldetag: 07.08.1991
(51) Int. Cl.: F16F 7/12, F16F 9/30

(54) **Aufprall-Dämpfungsvorrichtung, insbesondere für Kraftfahrzeuge**
Shock absorbing device, particularly for motor vehicles
Dispositif d'amortissement de chocs, particulièrement pour véhicules

(30) Priorität: 07.09.1990 DE 4028448
(43) Veröffentlichungstag der Anmeldung: 11.03.1992
(73) Patentinhaber: SUSPA COMPART Aktiengesellschaft, D-90518 Altdorf (DE)
(72) Erfinder: Siegner, Helge, W-8503 Altdorf-Röthenbach (DE); Prottengeier, Edgar, W-8500 Nürnberg (DE)
(74) Vertreter: Rau, Manfred, Dr. Dipl.-Ing.

(56) Entgegenhaltungen:
- EP-A- 0 072 323
- EP-A- 0 364 432
- DE-A- 2 441 557
- FR-A- 2 129 258
- FR-A- 2 211 901
- GB-A- 1 231 292
- GB-A- 1 300 665
- GB-A- 1 419 698
- US-A- 3 298 465
- US-A- 4 272 114

## Beschreibung

Die Erfindung bezieht sich auf eine Aufprall-Dämpfungsvorrichtung insbesondere für Kraftfahrzeuge nach dem Oberbegriff des Anspruches 1.

Eine derartige Aufprall-Dämpfungsvorrichtung für Kraftfahrzeuge mit einem Energie verzehrenden Deformations-Dämpfer ist aus US-A-3 298 465 bekannt. In einem Gleitrohr dieses Dämpfers ist ein in Richtung seiner Mittel-Längs-Achse gedämpft verschiebbarer Deformations-Kolben angeordnet. Im Gleitrohr sitzt ein becherartiger Einsatz, der einen dem Deformations-Kolben zugewandten Boden und geschlitzte Seitenwände aufweist. Bei einem Aufprall stößt der Deformations-Kolben gegen den Becherboden und drückt diesen durch das von den geschlitzten Seitenwänden umgrenzte Volumen des Einsatzes hindurch. Dabei werden die durch die Schlitze des Einsatzes gebildeten Wandstege unter Abwälzen auf der Mantelfläche des Kolbens plastisch deformiert und dadurch Aufprallenergie irreversibel absorbiert.

Nachteilig bei der bekannten Aufprall-Dämpfungsvorrichtung ist der relativ komplexe Aufbau des Deformations-Dämpfers, der einen aufwendig geformten, becherförmigen, mit geschlitzten Wänden versehen Deformationseinsatz als gesondertes Bauteil benötigt.

DE-A-24 41 557 und FR-A-22 11 901 zeigen Aufprall-Dämpfungsvorrichtungen, bei denen reversible Pralldämpfer mit irreversibel arbeitenden Deformations-Dämpfern kombiniert sind. Bei der Aufprall-Dämpfungsvorrichtung gemäß der erstgenannten Druckschrift ist dabei der Deformations-Dämpfer in die Stoßstange eines Kraftfahrzeuges integriert. Bei einem Ansprechen des Deformations-Dämpfers wird die Stoßstange vollständig deformiert, so daß sie unter entsprechend hohen Reparaturkosten vollständig erneuert werden muß.

Ein weiterer Nachteil der Integration des Deformations-Dämpfers in die Stoßstange liegt darin, daß die Absorptionscharakteristik bei der Energieverzehrung stark von den Verhältnissen beim Aufprall - also insbesondere vom Aufprallwinkel und der Geometrie des Objektes, auf das die Stoßstange stößt - abhängig ist.

Bei der in FR-A-22 11 901 gezeigten Dämpfungsvorrichtung ist von Nachteil, daß der Deformations-Dämpfer mit den beiden ineinandersitzenden Rechteck- bzw. Rundrohren als Ganzes deformiert wird. Damit läßt sich ebenfalls keine genau definierte Dämpfungscharakteristik erzielen.

Reversible Pralldämpfer sind darüber hinaus auch aus der DE 21 49 759 C3 (entsprechend US Serial Number 113 516 vom 8. Februar 1971) bekannt. Diese bekannten Dämpfer sind im Prinzip wie konventionelle hydraulische Dämpfer ausgebildet, d.h. sie weisen ein zylindrisches, an einem Ende geschlossenes Gehäuse auf, in dem ein Dämpfungs-Kolben mit Dämpfungskanälen axial verschiebbar angeordnet ist, der an einem Ende einer Kolbenstange angebracht ist, die aus einem Ende des zylindrischen Gehäuses abgedichtet herausgeführt ist. Als kompressible Feststoffe werden solche verwendet, wie sie beispielsweise aus der US 3 o53 526 bekannt bzw. unter dem Handelsnamen "Silastic" der Dow-Corning Corporation, USA, handelsüblich sind. Beim Einschieben der Kolbenstange wird deren Volumen verdrängt, d.h. der kompressible Feststoff wird um das eindringende Volumen der Kolbenstange komprimiert. Gleichzeitig wird der Feststoff durch die Dämpfungskanäle des Kolbens gepreßt, wodurch eine hohe Dämpfung eintritt. Die Dämpfungskanäle können auch durch einen Ringspalt zwischen Kolben und Gehäuse-Innenwand gebildet werden. Durch die Kompression des Feststoffes wird dieser gleichzeitig vorgespannt, so daß die Kolbenstange bei entsprechender Entlastung wieder aus dem Gehäuse herausgeschoben wird. Derartige Pralldämpfer sind in der Praxis in großem Umfang im Einsatz und haben sich dort außerordentlich bewährt, und zwar bei einer An ordnung zwischen Stoßstange und Rahmen eines Kraftfahrzeuges. Sie können in der Praxis üblicherweise einen Aufprall des Kraftfahrzeuges auf ein Hindernis bis zu einer Geschwindigkeit von etwa 8 km pro Stunde reversibel dämpfen, d.h. ohne daß es zu Verformungen, also Schäden, am Kraftfahrzeug kommt.

Aus der DE 34 19 165 ist eine Aufprall-Dämpfungsvorrichtung bekannt, bei der in einem zylindrischen Gehäuse einerseits eine Gasfeder und andererseits ein hydraulischer Dämpfer angeordnet sind, in denen ein Dämpfungskolben mit einer rohrförmigen Kolbenstange angebracht ist. Die hydraulische Dämpfung erfolgt durch eine im Gehäuse ortsfest angeordnete Drossel. Die hydraulische Aufpralldämpfung und die Dämpfung durch die Gasfeder sind reversibel. Um eine zusätzliche absorbierende Wirkung nach Vollendung des vollen Arbeitshubes des Kolbens zu erreichen, ist dessen rohrförmige Kolbenstange mit einer Sollknickstelle versehen, so daß die rohrförmige Kolbenstange bei Überschreiten einer vorgegebenen zu dämpfenden Energie unter Aufnahme entsprechender Verformungsenergie zerstört wird. Dieser Pralldämpfer ist verhältnismäßig aufwendig und relativ lang.

Der Erfindung liegt ausgehend von der aus US-A-3298465 bekannten Dämpfungsvorrichtung die Aufgabe zugrunde, eine solche Dämpfungsvorrichtung so auszugestalten, daß der Deformationsdämpfer bei einfacher Ausgestaltung und kompaktem Aufbau eine zuverlässige und definierte Dämpfung von Kräften ermöglicht.

Diese Aufgabe wird erfindungsgemäß durch die Merkmale im Kennzeichnungsteil des Anspruches 1 gelöst. Die erfindungsgemäße Ausgestaltung ermöglicht, daß erhebliche Kräfte aufgenommen werden können, ohne daß Teile des Kraftfahrzeuges beschädigt oder zerstört werden.

Die Ausgestaltung des Deformations-Dämpfers nach Anspruch 1 und in der weiteren Detailausgestaltung nach den Ansprüchen 2 bis 5 ist sehr einfach und vielseitig und in der Lage, über einen relativ großen zusätzlichen Dämpfungsweg Energie irreversibel zu vernichten, ohne daß die Baulänge bzw. der notwendige Einbauraum für den Dämpfer nennenswert vergrößert wird.

Durch die Ausgestaltung der Aufprall-Dämpfungsvorrichtung gemäß den Ansprüchen 6 bis 10 ist es möglich, in an sich bekannter Weise Aufprallkräfte reversibel zu dämpfen, wobei bekannte reversible Pralldämpfer weitgehend unverändert übernommen werden können. Auch die der Kolbenstange zugeordneten Befestigungselemente können in ihrer Lage praktisch unverändert bleiben.

Weitere Vorteile, Merkmale und Einzelheiten der Erfindung ergeben sich aus der nachfolgenden Beschreibung eines Ausführungsbeispieles anhand der Zeichnung. Es zeigt
- Fig. 1: einen Längsschnitt durch einen Dämpfer,
- Fig. 2: einen Querschnitt durch den Dämpfer gemäß der Schnittlinie II-II in Fig. 1,
- Fig. 3: den Dämpfer in reversibel zusammengeschobenem Zustand,
- Fig. 4: den Dämpfer in teilweise irreversibel zusammengeschobenem Zustand und
- Fig. 5: ein Weg-Kraft-Diagramm des Dämpfers.

Der in der Zeichnung dargestellte Pralldämpfer A weist in üblicher Weise ein zylindrisches Gehäuse 1 auf, an dessen einem geschlossenen Ende ein rohrförmiges Befestigungselement 2 angebracht ist, mittels dessen der Dämpfer beispielsweise mit der Stoßstange eines Kraftfahrzeugs verbunden werden kann.

Im Gehäuse 1, und zwar fluchtend mit dessen Mittel-Längs-Achse 3, ist ein Dämpfungs-Kolben 4 angeordnet und in Richtung der Achse 3 verschiebbar. Am Kolben 4 ist eine Kolbenstange 5 befestigt, die durch eine gleichzeitig als Verschlußdeckel für das Gehäuse 1 dienende Führung 6 koaxial aus dem Gehäuse 1 herausgeführt ist. Die Führung 6 ist mittels einer in eine umlaufende Nut 7 eingedrückten Sicke 8 des Gehäuses 1 mit letzterem axial unverschiebbar verbunden. Der Innenraum 9 des Gehäuses 1 ist mit einem kompressiblen Feststoff 1o gefüllt. Derartige kompressible Feststoffe sind beispielsweise aus der US 3 o53 526 bekannt. Sie sind marktgängig, beispielsweise unter der Handelsmarke "Silastic" der Dow-Corning Corporation, USA. Sie werden beispielsweise in Aufprallstoßdämpfern für Automobile eingesetzt, wie sie aus der DE 21 49 759 C3 bekannt sind. Derartige kompressible Feststoffe sind reversibel kompressibel, d.h. ihr Volumen verringert sich unter Druck, und zwar zunehmend mit entsprechender Erhöhung des Druckes. Bei Druckentlastung nehmen sie wieder ihr ursprüngliches Volumen ein. Insgesamt haben sie also auch entsprechende elastische Eigenschaften.

Der Dämpfungs-Kolben 4 weist Dämpfungskanäle 11 auf, durch die der Feststoff 1o bei einem Eindrücken der Kolbenstange 5 mit dem Kolben 4 in das Gehäuse 1 hinein unter Erzeugung entsprechend hoher Dämpfungskräfte hindurchgepreßt wird. Diese Dämpfungskanäle 11 sind in Form von Bohrungen ausgeführt. Im Innenraum 9 ist weiterhin vor der Führung 6 eine Doppel-Dichtung 12 angeordnet, die einerseits gegen die Kolbenstange 5 und andererseits gegen die Innenwand 13 des Gehäuses 1 abdichtet. Pralldämpfer A bzw. Feststoffdämpfer, wie sie bisher beschrieben sind, sind aus der DE 21 49 759 C3 bekannt.

Im Bereich der Führung 6 ist auf dem Außenumfang des Gehäuses 1 eine Führungsbüchse 14 in Richtung der Achse 3 verschiebbar angeordnet und geführt, auf der ein Gleitrohr 15 angeordnet ist. Dieses Gleitrohr 15 wird von einem Tragrohr 16 umgeben, das auf diesem axial unverschiebbar, beispielsweise durch Anschweissen, befestigt ist. Am Tragrohr 16 sind als Flansche ausgebildete Befestigungselemente 17 angebracht, mittels derer das Tragrohr 16 des Dämpfers beispielsweise am Rahmen eines Kraftfahrzeuges befestigt wird.

An dem dem Dämpfungs-Kolben 4 entgegengesetzten, ausserhalb des Gehäuses 1 liegenden Ende der Kolbenstange 5 ist diese in einer als Deformations-Kolben 18 ausgebildeten Widerlagerplatte abgestützt. Diese liegt gegen in Längsrichtung, d.h. parallel zur Achse 3 verlaufende, in der Wand des Gleitrohres 15 ausgebildete, nach innen zur Achse 3 hin vorspringende, wulstartige Sicken 19 an, und zwar gegen deren dem Gehäuse 1 zugewandte Enden 2o. Der Deformations-Kolben 18 liegt über eine sich zur Achse 3 hin verjüngende Führungsschräge 21 gegen diese Enden 2o an, während er ansonsten ringzylindrisch ausgebildet ist, wobei der Außendurchmesser D des ringzylindrischen Außenumfangs 22 des Kolbens 18 etwa gleich dem Innendurchmesser d des Gleitrohres 15 ist. Das Gleitrohr 15 mit den Sicken 19 und dem Deformations-Kolben 18 bildet einen Deformations-Dämpfer B.

Alle wesentlichen Teile bestehen aus Metall, d.h. das Gehäuse 1, der Dämpfungs-Kolben 4, die Kolbenstange 5, der Deformations-Kolben 18, die Befestigungselemente 2,17 und das Tragrohr 16 bestehen aus Stahl. Auch das Gleitrohr 15 besteht aus Metall, wobei dieses plastisch verformbar sein muß.

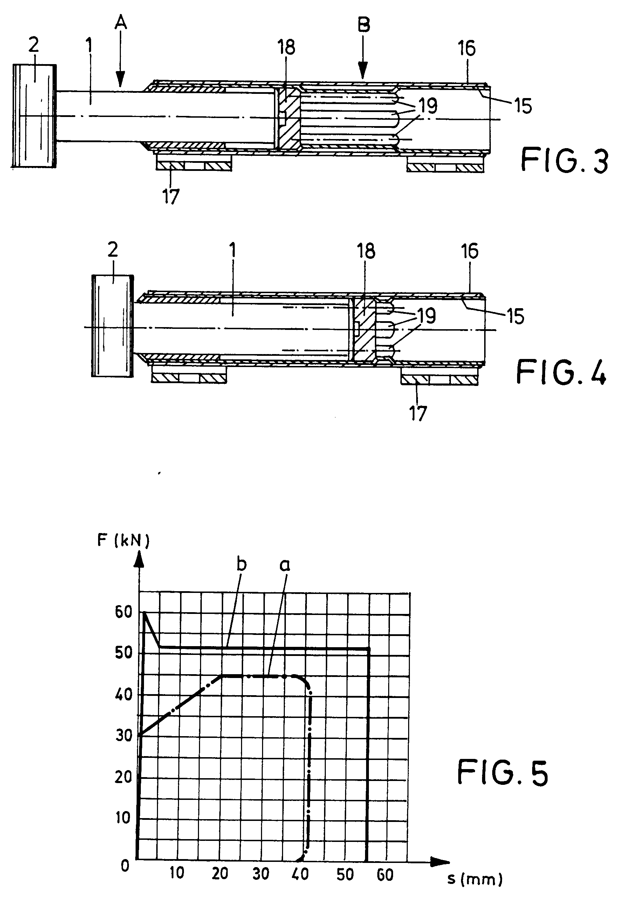

Wenn über die Befestigungselemente 2 und 17 Kräfte F aufgebracht werden, die die Kolbenstange 5 mit Kolben 4 in das Gehäuse 1 hineinzuschieben trachten, dann wird die Einheit aus Gleitrohr 15 und Tragrohr 16 auf dem Gehäuse 1 in Richtung der Achse 3 in Richtung auf das Befestigungselement 2 verschoben, wobei gleichzeitig die Kolbenstange 5 den Dämpfungs-Kolben 4 in den kompressiblen Feststoff 1o hineindrückt, wodurch in üblicher Weise reversibel Dämpfungskräfte erzeugt werden. Der Deformations-Kolben 18 ändert hierbei seine relative Lage zum Gleitrohr 15 nicht. Im Grenzfall erfolgt diese Einschubbewegung von Kolbenstange 5 mit Kolben 4 in das Gehäuse 1 bis in die in Fig. 3 dargestellte Stellung, bei der der Deformations-Kolben 18 zur Anlage am Gehäuse 1 kommt. Wenn die auf den Pralldämpfer A aufgebrachte Aufprallenergie in diesem Stadium noch nicht aufgezehrt ist, dann verschiebt sich der Deformations-Kolben 18 relativ zum Gleitrohr 15 bis zum Tragrohr 16 in Richtung der Sicken 19, wobei diese rückverformt werden, d.h. sie werden in Richtung auf die Innenwand 23 des Tragrohrs 16 verformt, wodurch ihr Innendurchmesser dann dem Außendurchmesser D des Deformations-Kolbens 18 entspricht. Hierbei wird irreversible Deformationsarbeit geleistet, d.h. Aufprallenergie wird irreversibel in plastische Rück-Verformung der Sicken 19 umgesetzt. Ein Zwischenstadium dieser Rück-Verformung ist in Fig. 4 dargestellt.

In Fig. 5 ist mit a ein Weg-Kraft-Diagramm für den reversiblen Pralldämpfer A bezeichnet. Mit b ist die Weg-Kraft-Kennlinie des Deformations-Dämpfers B bezeichnet. Wie der Kurve a zu entnehmen ist, steigt diese Kennlinie erst linear an; in diesem Bereich vergrößert sich die Dämpfung wegen der Kompression des Feststoffes 1o. Anschließend ist eine konstante Dämpfung gegeben. Die Dämpfungskräfte sind immer etwas kleiner als die ebenfalls im wesentlichen linearen Dämpfungskräfte, die bei der Deformation des Deformations-Dämpfers B auftreten. Auf diese Weise ist sichergestellt, daß immer zuerst die reversible Dämpfung stattfindet und nur bei Überschreiten eines vorgegebenen maximal zulässigen Wertes an zu dämpfender Energie der Deformations-Dämpfer B zum Einsatz kommt.

Die Höhe der Dämpfungskraft des Deformations-Dämpfers B entsprechend der Kennlinie b kann durch die Zahl der Sicken 19, durch die Form der Sicken 19, nämlich ihre Tiefe und ihr Profil, durch Wahl des Materials des Gleitrohres 15, durch die Wanddicke c des Gleitrohres 15, durch die Form des Deformations-Kolbens 18 im Bereich seines Außenumfangs 22 und durch eine mögliche Schmierung zwischen Deformations-Kolben 18 und Gleitrohr 15 beeinflußt werden.

Der Verbund von Gleitrohr 15 und Tragrohr 16 führt zu einer hohen Stabilität und zu einer hohen Belastbarkeit quer zur Achse 3. Dies ist wichtig bei einem Schrägaufprall.

Wie Fig. 4 erkennen läßt, kann der Dämpfer insgesamt so weit zusammengefahren werden, bis die Führungsbüchse 14 mit dem Gleitrohr 15 am Befestigungselement 2 angelangt ist. Die Länge L der Sicken 19 wird daher zweckmäßigerweise nicht nennenswert größer gemacht, als dieser Stellung der Führungsbüchse 14 mit Gleitrohr 15 entspricht. Hinzugefügt sei an dieser Stelle, daß der Weg s, der tatsächlich vom Dämpfungs-Kolben 18 auf den Sicken 19 unter deren Rück-Verformung überfahren werden kann, direkt proportional der durch Dämpfung umzuwandelnden Energie ist, wie sich auch aus dem Diagramm gemäß Fig. 5 ergibt.

Die Sicken 19 können sich auch in Richtung der Achse 3 in ihrem Querschnitt verändern, also verbreitern oder verjüngen, so daß bei der Verschiebung des Deformations-Kolbens 18 über die Sicken 19 zunehmende oder abnehmende Dämpfungskräfte auftreten. In diesem Fall verläuft die Weg-Kraft-Kennlinie b gemäß Fig. 5 nicht waagerecht, sondern steigend oder fallend.

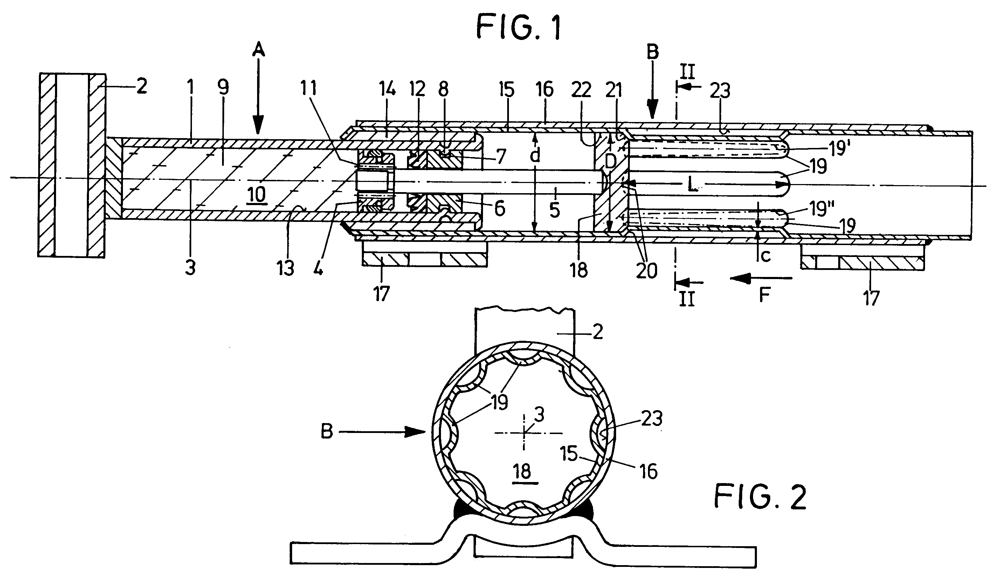

Eine solche sich in Richtung L verjüngende Sicke 19′ ist in Fig. 1 gestrichelt eingezeichnet. Eine sich in Richtung L erweiternde Sicke 19˝ ist in Fig. 1 strichpunktiert angedeutet.

Ein Dämpfer nach der Erfindung kann auch dadurch gegeben sein, daß der Pralldämpfer A nicht vorhanden ist, sondern nur ein Deformations-Dämpfer B. In diesem Fall ist also die Deformations-Platte starr mit dem Befestigungselement 2 verbunden, beispielsweise über ein Rohr entsprechend dem Gehäuse 1.

## Patentansprüche

1. Aufprall-Dämpfungsvorrichtung, insbesondere für Kraftfahrzeuge, mit einem Deformations-Dämpfer (B), der ein Gleitrohr (15) und einen darin in Richtung seiner Mittel-Längs-Achse (3) gedämpft verschiebbaren Deformations-Kolben (18) aufweist, dadurch gekennzeichnet, daß das Gleitrohr (15) mit nach innen gerichteten, rück-verformbaren Vorsprüngen in Form von im wesentlichen parallel zur Mittel-Längs-Achse (3) verlaufenden Sicken (19) versehen ist, gegen die der Deformations-Kolben (18) abgestützt ist.

2. Aufprall-Dämpfungsvorrichtung nach Anspruch 1, dadurch gekennzeichnet, daß der Deformations-Kolben (18) einen im wesentlichen zylindrischen Außenumfang (22) aufweist, der an der Innenwand des Gleitrohres (15) anliegt.

3. Aufprall-Dämpfungsvorrichtung nach Anspruch 2, dadurch gekennzeichnet, daß der Deformations-Kolben (18) eine an den zugewandten Enden (20) der Sicken (19) anliegende Führungsschräge (21) aufweist.

4. Aufprall-Dämpfungsvorrichtung nach Anspruch 1, 2 oder 3, dadurch gekennzeichnet, daß die Sicken (19) über ihre Länge (L) im wesentlichen gleichbleibenden Querschnitt aufweisen.

5. Aufprall-Dämpfungsvorrichtung nach Anspruch 1,2 oder 3, dadurch gekennzeichnet, daß die Sicken (19′,19˝) sich über ihre Länge verjüngen.

6. Aufprall-Dämpfungsvorrichtung nach einem der Ansprüche 1 bis 5, gekennzeichnet durch einen reversiblen Pralldämpfer (A) mit einem mit einem Dämpfungsmedium, insbesondere kompressiblem Feststoff (1o) gefüllten Gehäuse (1), in dem eine Kolbenstange (5) in Richtung der Mittel-Längs-Achse (3) des Gehäuses (1) verschiebbar angeordnet ist, wobei einerseits dem Gehäuse (1) und andererseits der Kolbenstange (5) Befestigungselemente (2 bzw. 17) zur Einleitung von zu dämpfenden Kräften (F) zugeordnet sind, wobei sich die Kolbenstange (5) mit ihrem außerhalb des Gehäuses (1) befindlichen Ende gegen den Deformations-kolben (18) des Deformations-Dämpfers (B) abstützt.

7. Aufprall-Dämpfungsvorrichtung nach Anspruch 6, dadurch gekennzeichnet, daß das Gleitrohr (15) des Deformations-Dämpfers (B) relativ zum Gehäuse (1) in Richtung der Achse (3) verschiebbar ist.

8. Aufprall-Dämpfungsvorrichtung nach Anspruch 6 oder 7 dadurch gekennzeichnet, daß der Deformations-Kolben (18) mit Kolbenstange (5) und das Gehäuse (1) gemeinsam relativ zum Gleitrohr (15) verschiebbar sind.

9. Aufprall-Dämpfungsvorrichtung nach Anspruch 8, dadurch gekennzeichnet daß der Deformations-Kolbens (18) gegen das Gehäuse (1) anliegend durch das Gleitrohr (15) verschiebbar ist.

10. Aufprall-Dämpfungsvorrichtung nach einem der Ansprüche 6 bis 9, dadurch gekennzeichnet, daß das Gleitrohr (15) von einem Tragrohr (16) umgeben und mit diesem in Richtung der Achse (3) fest verbunden ist und daß die der Kolbenstange (5) zugeordneten Befestigungselemente (17) am Tragrohr (16) befestigt sind.

## Claims

1. Shock absorbing device, in particular for motor vehicles, with a deformation damper (B) having a slide tube (15) and a deformation piston (18) for damped displacement within the latter in the direction of its central longitudinal axis (3), characterized in that the slide tube (15) is provided with reversibly deformable projections directed inwards in the form of crimps (19) which extend substantially in parallel to the central longitudinal axis (3) and against which the deformation piston (18) bears.

2. Shock absorbing device according to claim 1, characterized in that the deformation piston (18) has an essentially cylindrical exterior circumference (22) resting against the internal wall of the slide tube (15).

3. Shock absorbing device according to claim 2, characterized in that the deformation piston (18) has a guide bevel (21) bearing against the ends of the crimps (19) facing the deformation piston (18).

4. Shock absorbing device according to claim 1, 2 or 3, characterized in that the crimps (19) have essentially the same cross-section over their length (L).

5. Shock absorbing device according to claim 1, 2 or 3, characterized in that the crimps (19′, 19˝) taper over their length.

6. Shock absorbing device according to one of claims 1 to 5, characterized by a reversible impact damper (A) with a housing (1) filled with a damping medium, in particular a compressible solid (10), in which housing (1) a piston rod (5) is arranged to be displaceable in the direction of a central longitudinal axis (3) of the housing (1), securing elements (2 or 17, respectively) being associated with the housing (1) on the one hand and with the piston rod (5) on the other hand for leading in forces (F) to be absorbed, the piston rod (5) bearing with its end located outside the housing (1) against the deformation piston (18) of the deformation damper (B).

7. Shock absorbing device according to claim 6, characterized in that the slide tube (15) of the deformation damper (B) is displaceable relative to the housing (1) in the direction of the axis (3).

8. Shock absorbing device according to claim 6 or 7, characterized in that the deformation piston (18) with the piston rod (5) and the housing (1) are displaceable in common relative to the slide tube (15).

9. Shock absorbing device according to claim 8, characterized in that the deformation piston (18), while bearing against the housing (1), is displaceable through the slide tube (15).

10. Shock absorbing device according to one of claims 6 to 9, characterized in that the slide tube (15) is surrounded by a suspension tube (16) and is firmly connected with the latter in the direction of the axis (3) and in that the securing elements (17) associated with the piston rod (5) are mounted on the suspension tube (16).

## Revendications

1. Dispositif d'amortissement de chocs, en particulier pour véhicules, avec un amortisseur de déformation (B), qui présente un tube de glissement (15) et un piston de déformation (18) déplaçable là-dedans de façon amortie dans le sens de son axe central longitudinal (3), caractérisé en ce que le tube de glissement (15) est pourvu de saillies réversiblement déformables dirigées vers l'intérieur du type de moulures (19) qui vont essentiellement en parallèle à l'axe central longitudinal (3) et contre lesquelles le piston de déformation (18) s'appuie.

2. Dispositif d'amortissement de chocs selon la revendication 1, caractérisé en ce que le piston de déformation (18) présente une circonférence extérieure (22) essentiellement cylindrique qui s'appuie à la paroi intérieure du tube de glissement (15).

3. Dispositif d'amortissement de chocs selon la revendication 2, caractérisé en ce que le piston de déformation (18) présente une déclivité de guidage (21) qui s'accote aux extrémités (20) des moulures (19) qui font face au piston de déformation (18).

4. Dispositif d'amortissement de chocs selon la revendication 1, 2 ou 3, caractérisé en ce que les moulures (19) présentent une coupe transversale essentiellement constante sur leur longueur (L).

5. Dispositif d'amortissement de chocs selon la revendication 1, 2 ou 3, caractérisé en ce que les moulures (19′, 19˝) s'effilent sur leur longueur.

6. Dispositif d'amortissement de chocs selon l'une quelconque des revendications 1 à 5, caractérisé par un amortisseur de chocs réversible (A) avec une boîte (1) remplie d'un agent d'amortissement, en particulier une matière solide compressible, dans laquelle une tige de piston (5) est arrangée de façon déplaçable dans le sens de l'axe central longitudinal (3) de la boîte (1), des éléments de fixation (2 et 17, respectivement) étant conjugués à la boîte (1) d'une part et à la tige de piston (5) d'autre part pour l'introduction de forces (F) à amortir, la tige de piston (5), avec son extrémité située au dehors de la boîte (1), s'appuyant contre le piston de déformation (18) de l'amortisseur de déformation (B).

7. Dispositif d'amortissement de chocs selon la revendication 6, caractérisé en ce que le tube de glissement (15) de l'amortisseur de déformation (B) est déplaçable par rapport à la boîte (1) dans le sens de l'axe (3).

8. Dispositif d'amortissement de chocs selon la revendication 6 ou 7, caractérisé en ce que le piston de déformation (18) avec la tige de piston (5) et la boîte (1) sont déplaçables en commun par rapport au tube de glissement (15).

9. Dispositif d'amortissement de chocs selon la revendication 8, caractérisé en ce que le piston de déformation (18), s'appuyant contre la boîte (1), est déplaçable à travers le tube de glissement (15).

10. Dispositif d'amortissement de chocs selon l'une quelconque des revendications 6 à 9, caractérisé en ce que le tube de glissement (15) est entouré d'un tube de support (16) et fermement raccordé avec celui-ci dans le sens de l'axe (3) et en ce que les éléments de fixation (17) conjugués à la tige de piston (5) sont fixés sur le tube de support (16).
